# EUROPÄISCHE PATENTSCHRIFT

(11) **EP 0 637 760 B1**
(45) Veröffentlichungstag und Bekanntmachung des Hinweises auf die Patenterteilung: **07.10.1998**
(21) Anmeldenummer: 94110476.2
(22) Anmeldetag: 06.07.1994
(51) Int. Cl.: G01V 3/11, G01V 3/10

(54) **Verfahren zur elektromagnetischen Detektion von Objekten**
Method for the electromagnetic detection of objects
Méthode pour la détection électromagnétique d'objets

(30) Priorität: 03.08.1993 DE 4326030
(43) Veröffentlichungstag der Anmeldung: 08.02.1995
(73) Patentinhaber: Ebinger, Klaus, D-51149 Köln (DE)
(72) Erfinder: Ebinger, Klaus, Ing., D-51149 Köln (DE); Günnewig, Augustinus, D-50733 Köln (DE)
(74) Vertreter: Heim, Hans-Karl, Dipl.-Ing.

(56) Entgegenhaltungen:
- WO-A-87/06354
- DE-A- 2 726 972
- FR-A- 2 379 047
- FR-A- 2 516 250

## Beschreibung

Die Erfindung betrifft ein Verfahren zur elektromagnetischen Detektion schwingungsfähiger Objekte gemäß Oberbegriff des Anspruches 1.

Verfahren vergleichbarer Art sind beispielsweise aus der DE 27 21 690 C2 oder DE 27 26 972 A1 bekannt.

In Dokument WO-A-8 706 354 wird ein induktiver Näherungssensor beschrieben, der durch elektrische Impulse angeregt wird. Dieser Sensor dient zur Messung des Abstands zwischen dem Sensor und einem LC-Schwingkreis und wird beispielsweise in einem Wasserzähler eingesetzt. Mit einem über einen Transformator gekoppeltem Schleifensystem werden Gleichstromimpulse ausgesendet, mit denen ein LC-Schwingkreis angeregt wird, der beispielsweise in dem Flügelrad des Wasserzählers angeordnet sein kann. Der angepulste LC-Schwingkreis erzeugt exponentiell abklingende gedämpfte Schwingungen, die empfangen und zur Auswertung gezählt werden.

Bei diesen bekannten Verfahren hat man bereits Maßnahmen ergriffen, um Suchobjekte, wie dünne Litzen und Drähte aus NE-Metall detektieren zu können. Ein Problem bestand bei diesen Lösungen bereits darin, daß z.B. aufgrund der geringen Flächenwirkung bei Drähten, z.B. feinen Kupferdrähten, kaum Wirbelströme induziert werden konnten. Die beiden vorgenannten Druckschriften gehen bei ihren Lösungen davon aus, daß insbesondere längere Drähte wie Antennen wirken und unter diesem Gesichtspunkt auch die Detektion schwingungsfähiger Gebilde erreicht und ermittelt werden kann.

Hierfür ist im Stand der Technik vorgesehen einen gewobbelten Sender zu verwenden, wobei die Wobbelfrequenz in den Schwingungsbereich des zu detektierenden Drahtes mit seiner Antennenwirkung gelangen mußte, um detektierbare Effekte erzeugen zu können.
Der Nachteil bei diesen Lösungen im Stand der Technik ist vor allen Dingen in der recht aufwendigen Wobbeltechnik zu sehen, wobei sich beim Suchen entsprechender Objekte eine große Zeitkonstante in der Anzeige ergeben kann, da mit jedem Wobbelhub die Eigenfrequenz des zu detektierenden Drahtes bzw. Objektes getroffen werden muß.

Unterstellt man unterschiedlich große Drahtlängen so ist die Wirkungsweise der auf Wobbeltechnik beruhenden Detektoren äußerst ineffizient. Dies bereits aufgrund des relativ großen Zeitaufwandes im Hinblick auf das Durchwobbeln bis zur Ermittlung der entsprechenden Eigenfrequenz des gesuchten Objektes.
Darüberhinaus eignen sich derartige Verfahren und Vorrichtungen nur im Hinblick auf die Ortung von Drähten, nicht aber in universellerer Art für die Ortung von Minen, Metallgegenständen oder dielektrischen Gegenständen.

Unter Berücksichtigung der Nachteile bei Verfahren nach dem Stand der Technik liegt daher der Erfindung die **Aufgabe** zugrunde, ein universell einsetzbares Verfahren aufzuzeigen, das eine effizientere Suchmethode erlaubt, wobei dünne Litzen und Drähte ebenso wie Minen und Minenmarkierungen aufgespürt werden können.

Diese Aufgabe wird bei einem gattungsgemäßen Verfahren durch die Merkmale des kennzeichnenden Teils des Anspruches 1 gelöst.

Ein wesentlicher Grundgedanke der Erfindung besteht darin, eine universelle Methode zu finden, die neben der Detektion von schwingungsfähigen Gebilden auch in der Lage ist, leitfähige und dielektrische Körper zu orten.

Bei dem Verfahren entfällt das zeitaufwendige Durchwobbeln einer ausgesendeten Sinusschwingung. Als Primärsignal kommt eine kontinuierliche Folge kurzer, steilflankiger, vorzugsweise bipolarer Pulse mit relativ großem Abstand zur Wirkung, die über eine Sendeschleife emittiert werden. Auf diese Weise wird gleichermaßen ein hoch- und niederfrequentes Suchfeld erzeugt, das schwingungsfähige Gebilde erregt, Wirbelströme in leitfähigen Objekten induziert und dielektrische Anzeigeeffekte auslöst.

Es ist durch die Fourier-Analyse bekannt, daß das ideale Rechtecksignal aus einer Summe ungeradzahliger Sinusschwingungen, deren Frequenz bis ins Unendliche geht, besteht. Auch niederfrequente Pulssignale, die sich zeitlich nach einer Sprungfunktion ändern, verfügen über einen HF-Anteil Bei einer Anstiegs- und Abfallzeit von ca. 10 ns ergibt sich immerhin eine Frequenz von 100 MHz. Entstehende Oberwellen können ein Vielfaches dieser Frequenz sein.

Magnetpulse haben allerdings den Nachteil, empfindliche Minenzünder anzutriggern und damit auszulösen. Der Grund ist der, daß eine magnetische Störung erzeugt wird, auf die der Zünder reagiert.

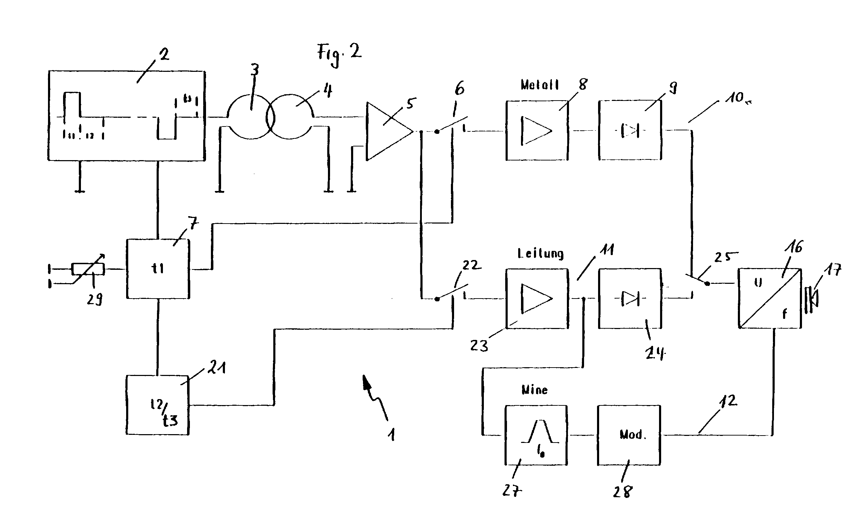

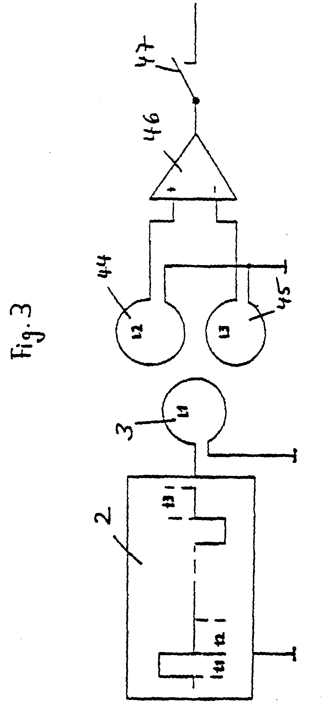

Ändert sich das Magnetfeld jedoch ständig in der Richtung und in den Momentanwerten ähnlich wie bei einem Wechselfeld, so ist diese magnetische Störung relativ gering. Aus diesem Grund kommt eine kontinuierliche Folge bipolarer Pulse zur Wirkung, die über eine entkoppelte Suchschleife gemäß Fig. 2 oder 3 ausgesendet werden.

Die Peridendauer bzw. Wiederholzeit des Primärsignals wird so gewählt, daß in den "Pausen" die relativ lange, gedämpfte Sinusschwingung eines schwingungsfähigen Gebildes aufgenommen und gemessen werden kann. Insgesamt werden die zeitlichen Vorgänge um und nach dem Primärpuls für die Objekterkennung sekundärseitig untersucht und ausgewertet.

Zweckmäßigerweise weisen die bipolaren Pulse eine Pulsdauer von ca. 40 bis 200 ns und eine Wiederholzeit von etwa 2 bis 15 kHz auf. In Fig. 2 ist nicht dargestellt, daß man diese Wiederholzeit kontinuierlich variieren kann, was für verbesserte Anzeigeeffekte im Bereich schwingungsfähiger Gebilde von Vorteil ist.

Das Verfahren gestattet die Ausbildung eines hier als Minenpflaster bezeichneten schwingungsfähigen Gebildes, das mit herkömmlichen Detektionsmethoden nicht aufgefunden werden kann. Dieses Gebilde kann aus einigen offenen Drahtwindungen bestehen, die durch ihre Eigenkapazität einen Schwingkreis bestimmter Frequenz bilden. Durch Änderung der Wiederholzeit wird die Eigenfrequenz des Gebildes exakter getroffen und die Detektion entsprechend verbessert. Vorzugsweise eignet sich hierfür ein Gebilde in gedruckter Schaltungstechnik.

Dieses Gebilde stellt ein frequenzcodiertes Suchobjekt dar, das für metallarme Minen vorgesehen ist. Der Vorteil des Verfahrens ist der, daß das "Minenpflaster" objekt- und frequenzselektiv erkannt werden kann. Störeffekte durch Metall, Bodenmineralisierung usw. werden auf ein Minimum reduziert.

Durch entsprechende Samplingstufen können die zeitlichen Vorgänge des Sekundärsignals variabel untersucht werden.

Für die metallische Detektion werden vor allen Dingen die Sekundärsignale ausgewertet, die im Bereich des Primärsignales liegen und als gedämpfte Schwingung auftreten.

Dielektrische Objekte oder vergleichbare Objekte werden vor allen Dingen durch die Auswertung der im Bereich der Einund Ausschaltflanken des Primärpulses liegenden Sekundärsignale geortet.

Bevorzugterweise wird über mindestens eine Samplingstufe eine zeitliche Entkopplung der Sekundärsignale durchgeführt. Hierbei können vor allen Dingen Sekundärsignale in zeitlicher Übereinstimmung mit den Flanken der Primärpulse ausgeblendet werden, so daß objektspezifische, nachfolgende Sekundärsignale besser weiterverarbeitet werden können.

Bei der eigenen Markierung von Objekten kann dies mittels Frequenzcodierung z.B. eines in gedruckter Schaltungstechnik ausgeführten Schwingkreises, oder mit nur wenigen Windungen Kupferdraht erfolgen, die von einer Suchanordnung in der Breitbandposition aufgenommen werden kann.

Das Verfahren eignet sich daher in hervorragender Weise für Anwendungen im Polizei- und Militärbereich, wobei Metallobjekte, Sprengdrähte, Minen, Minenmarkierungen oder dergleichen geortet werden müssen.

Die Erfindung wird nachstehend anhand zweier schematischer Blockschaltbilder für das Verfahren verwendende Suchanordnungen dargestellt. Es zeigen:
- Fig. 1: eine schematische Darstellung der Primärpulse P in der oberen Signalfolge und entsprechende Sekundärsignale als untere Signalfolge;
- Fig. 2: ein Blockschaltbild für eine Suchanordnung als Relativmesser mit drei Kanälen, und
- Fig. 3: eine teilweise Darstellung einer weiteren Suchanordnung auf der Basis eines Differenzmessers.

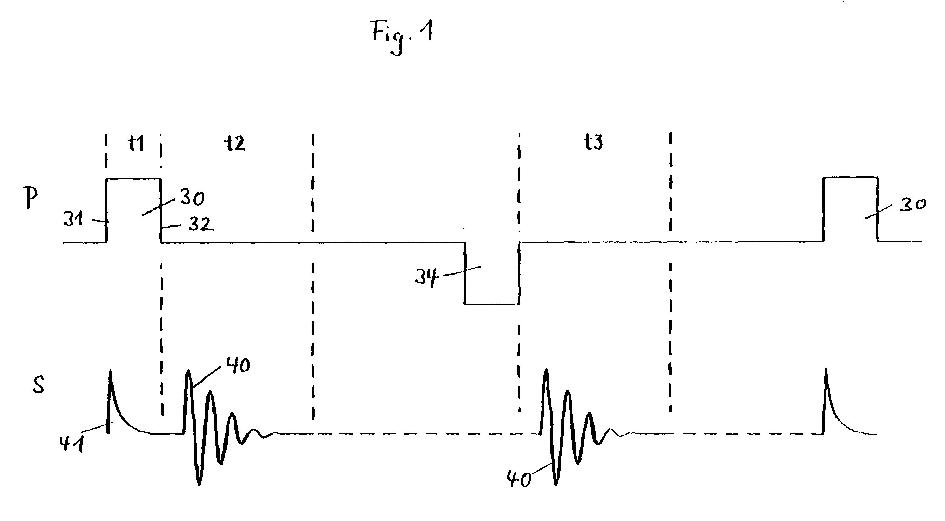

In Fig. 1 ist in der oberen Signalfolge das Primärsignal P dargestellt, das eine Folge kurzer, steilflankiger Magnetpulse 30 mit Anstiegsflanke 31 und Abfallflanke 32 aufweist. Die Pulsdauer beträgt hierbei t1. In zeitlichem Abstand, der z.B. einer Wiederholfrequenz von 5 kHz entsprechen kann, folgt im Beispiel nach Fig. 1 ein bipolarer, negativer Puls 34. Dieser wird von einem positiven Puls 30 gefolgt.

Das unter dem Primärsignal P dargestellte Sekundärsignal S ist nach Fig. 1 in vereinfachter Darstellung mit Unterdrükkung entsprechender Störsignale gezeigt. Im Bereich der Anstiegsflanke des Primärpulses P ist ein erster nadelförmiger Impuls 41 mit relativ kurzer Abklingzeit vorhanden.

Dieser Nadelimpuls kann als Rückantwort für leitfähige Objekte ausgewertet werden. Durch die Entkopplung der Suchschleifen 3 und 4 oder der Schleifen 3, 44 und 45 kann diese Rückantwort in der Primärphase aufgenommen und ausgewertet werden. Dazu dient die Samplingstufe 7 (t1).

Die Samplingzeit von tl kann so verändert werden, daß die Abfallflanke 32 des Pulses 30 auf dielektrische Anzeigeeffekte und Bodeninhomogenitäten untersucht werden kann.

Durch den HF-Anteil des emittierten Primärsignals P werden auch Leitfähigkeitsänderungen des Erdbodens oder auch Änderungen im Dielektrikum auch durch Verkopplungsänderungen der Sende- und Empfangsschleifen detektiert. Metall kommt hier nur noch gering zur Anzeige.

Die Samplingstufe 21 (t2) erfaßt die zeitlichen Vorgänge, die sich nach dem Abklingen des Primärpulses 30 ergeben. Dies sind die hochfrequenten, gedämpften Schwingungen 40 der schwingungsfähigen Gebilde, die relativ langsam nach einer e-Funktion ausklingen.

In Fig. 2 ist schematisch das Blockschaltbild einer das Verfahren realisierenden Suchanordnung 1 gezeigt. Die Folge kurzer Pulse 30, 34 wird von einem Sender 2 erzeugt und auf eine Sendespule 3 gegeben. Die vom zu detektierenden Objekt empfangenden Sekundärsignale S werden in einer Empfangsspule 4, die entkoppelt zur Sendespule 3 angeordnet ist, induziert.

Das in der Empfangsspule 4 detektierte Sekundärsignal S wird auf einen Verstärker 5 und einen anschließenden Analogschalter 6 gegeben. Der Analogschalter 6 wird über eine Samplingstufe 7, die auf ein Intervall tl eingestellt ist, gesteuert. Über einen weiteren Verstärker 8 und eine Gleichrichterstufe 9 gelangt das Sekundärsignal im Kanal 10 auf einen Wandler 16. Dieser Wandler kann als U/f-Wandler ausgelegt sein, so daß an dessen Ausgang über einen Lautsprecher 17 ein akustisches Signal abgestrahlt werden kann. Dieser erste Kanal 10 kann beispielsweise für die Metall-Detektion bestimmt sein.

Es ist ein zweiter Kanal 11 vorgesehen, wobei das am Ausgang des Verstärkers 5 erhaltene Sekundärsignal über einen weiteren Analogschalter 22 auf einen Verstärker 23 und nachfolgend auf einen Gleichrichter 24 gegeben wird. Über einen Schalter 25 ist zwischen Kanal 10 und Kanal 11 eine Umschaltung möglich.
Der Analogschalter 22 im zweiten Kanal 11 wird über eine weitere Samplingstufe 21, die auch als zwei getrennte Samplingstufen mit den Zeitkonstanten t2 und t3 angesehen werden kann, gesteuert.

Der dritte Kanal 12 ist im Beispiel als Abzweigung nach dem Verstärker 23 mit einer oder mehreren Filterstufen 27 und einem nachfolgendem Modulator 28 schematisch dargestellt. Der Ausgang des Modulators 28 ist dann auf den Wandler 16 geführt.

Nur beispielhaft ist ein Potentiometer 29 zur Einstellung der Zeitkonstanten der Samplingstufen mit dargestellt.

Die als Relativmesser ausgelegte Suchanordnung 1 nach Fig. 2 weist für den Kanal 10 eine Samplingzeit t1 auf, so daß in diesem Kanal vorzugsweise Metalleffekte im Bereich des Primärpulses bewertet werden können.

Die Samplingzeit t1 ist einstellbar, so daß sie z.B. auf die Abfallflanke des Primärsignales 30 verschoben werden kann und dadurch eine Anhebung der dielektrisch wirkenden Ortungseffekte erreicht wird.

Die Samplingstufe 21 mit den Zeitkonstanten t2 und t3 wird für die Kanäle 11 und 12 z.B. nach Ablauf von t1 gestartet, da die sinusförmige Sekundärschwingung, die z.B. von Sprengdrähten oder Minenpflastern herrühren kann, relativ lang fest.
Aufgrund der relativ großen Periodendauer der Primärpulse sind diese zeitlich genügend weit auseinander gezogen, so daß auch eine zeitliche Entkopplung von anderen Sekundäreffekten damit erreicht wird. Dies hat zur Folge, daß nur schwingungsfähige Gebilde und Objekte erfaßt werden.

Die vorgesehene bipolare Wirkung der Primärpulse, wie es in Fig. 1 dargestellt ist, hat den Vorteil, daß unter Berücksichtigung der kurzen Impulsdauer üblicherweise magnetische Zünder nicht angetriggert werden.

Die in Fig. 2 im Kanal 12 dargestellte Filterstufe 27 ist nur exemplarisch zu verstehen und kann selbstverständlich aus mehreren Filterstufen aufgebaut sein. Aufgrund dieser Filterung ist es möglich Minenpflaster im Sinne von markierten Nichtmetallminen objektselektiv zur Anzeige bringen zu können, wobei dies nahezu störungsfrei erfolgen kann. Anstelle der vorgesehenen akustischen Anzeige über einen Lautsprecher 17 kann selbstverständlich auch eine andere Auswertung optischer oder anderer definierter Art erfolgen. Auch ist es möglich die empfangenen Signale über einen Microcomputer auszuwerten und zu vergleichen.

In Fig. 3 ist ausschnittsweise vergleichbar zu Fig. 2 eine Suchanordnung als Differenzmesser dargestellt.

Die Sendespule 3 ist dabei entkoppelt von zwei Empfangsspulen 44, 45 gezeigt. Diese Empfangsspulen 44, 45 sind als Differenzmesser gegeneinander geschaltet und mit ihren Ausgängen auf den Plus- bzw. Minuseingang eines nachfolgenden Verstärkers 46 und an dessen Ausgang liegenden Analogschalters 47 geschaltet.
Die Anordnung der entsprechenden Spulen ist bekannt und sollte eine bestimmte, für die Differenzwirkung vorteilhafte Raumform aufweisen.
Mittels dieser Suchanordnung ist es möglich homogen verlaufende Hintergrundstörungen des Erdbodens automatisch zu kompensieren. Es können daher, sofern dies gewünscht ist, auch inhomogene Bodenbereiche erfaßt werden.

Der Differenzmesser eignet sich insbesondere zur Detektion nichtmetallener Körper im Bereich der Erdoberfläche, da Störsignale, die von Inhomogenitäten, von Feuchtigkeit, Steinen etc. herrühren können, weitgehend eliminiert werden können.

Bei einer Detektion über den Kanal 10, der im Beispiel als Detektionskanal für Metall angesehen wird, kann sowohl ein positiver 30 wie auch negativer Impuls 34 einzeln oder auch gemeinsam für die Ortungszwecke ausgewertet werden.

Das Verfahren und eine entsprechende Suchanordnung eignen sich daher in hervorragender Weise für die Detektion markierter Objekte, wobei dies mit hoher Effizienz erfolgt.

## Patentansprüche

1. Verfahren zur elektromagnetischen Detektion von Objekten, die schwingungsfähig sind und/oder leitfähige und/oder dielektrische Eigenschaften aufweisen, bei dem elektromagnetische Schwingungen in Form einer kontinuierlichen Folge kurzer, steilflankiger Pulse mit relativ großem Abstand als Primärsignale in den Bereich eines zu detektierenden Objekts gesendet werden, und die vom detektierten Objekt stammenden Sekundärsignale empfangen und ausgewertet werden,
dadurch **gekennzeichnet,**
daß als Primärsignale bipolare Pulse ausgesendet werden,
daß die Primärsignale über ein entkoppeltes Schleifensystem ausgesendet werden, und
daß die durch jeden Puls induzierten hoch- und niederfrequenten Sekundärsignale zur Spezifizierung der Objekte ausgewertet werden, wobei die Sekundärsignale als zeitliches Signal und/oder als Momentanwerte zeitlich sowohl in als auch nachfolgend zu den Pulsen des Primärsignals empfangen werden.

2. Verfahren nach Anspruch 1,
dadurch **gekennzeichnet,**
daß als Primärsignal bipolare Pulse mit einer Impulsdauer im Bereich von 40 bis etwa 200 ns und einer variablen oder wobbelbaren Wiederholfrequenz von etwa 2 bis 15 kHz verwendet werden.

3. Verfahren nach einem der Ansprüche 1 bis 2,
dadurch **gekennzeichnet**,
daß das von einem Puls des Primärsignals induzierte, hochfrequente Sekundärsignal eines schwingungsfähigen Objektes als gedämpfte Schwingung zeitlich nach dem Puls des Primärsignales so detektiert wird, daß leitfähige und/oder dielektrische Sekundärsignale eliminiert werden, und
daß die Periodendauer der gedämpften Schwingung des Sekundärsignales zur Ermittlung der Länge und/oder Frequenz des detektierten Objektes ausgewertet wird.

4. Verfahren nach einem der Anspüche 1 bis 3,
dadurch **gekennzeichnet,**
daß zur Detektion dielektrischer Objekte die Sekundärsignale zeitlich im Bereich der Anstiegs- und/oder Abfallflanke des jeweiligen Pulses des Primärsignales untersucht werden.

5. Verfahren nach Anspruch 1 bis 4,
dadurch **gekennzeichnet,**
daß eine Entkopplung des primären und sekundären Schleifensystems verwendet wird, so daß zeitgleich im Puls des Primärsignales das empfangene Sekundärsignal für leitfähige Objekte untersucht wird.

6. Verfahren nach einem der Ansprüche 1 bis 5,
dadurch **gekennzeichnet,**
daß zur Detektion ein Schleifensystem als Relativ- oder Differenzmesser eingesetzt wird.

7. Verfahren nach einem der Ansprüche 1 bis 6,
dadurch **gekennzeichnet**,
daß die Detektion des oder der gesuchten Objekte bei codierter Frequenz, die auf eine objektspezifisch vorgegebene Schwingkreisfrequenz eingestellt ist, erfolgt.

8. Verfahren nach Anspruch 7,
dadurch **gekennzeichnet,**
daß die objektspezifische Schwingkreisfrequenz durch vorgegebene Windungen eines Leiters, der insbesondere als gedruckte Schaltung ausgelegt wird, erzeugt wird.

## Claims

1. Method for the electromagnetic detection of objects, which are capable of oscillating and/or have conductive and/or comprise dielectric characteristics, in which electromagnetic oscillations are emitted in the form of a continuous sequence of short, steep-front pulses with a relatively large spacing as primary signals in the area of an object to be detected, and the secondary signals from the detected object are received and evaluated,
**characterized** in
that as primary signals bipolar pulses are emitted,
that the primary signals are emitted via a decoupled loop system and
that the high and low frequency secondary signals induced by each pulse are evaluated for specifying the objects, the secondary signals being received as a time signal and/or as instantaneous values both in and following the primary signal pulses.

2. Method according to claim 1,
**characterized** in
that as the primary signal use is made of bipolar pulses with a pulse duration in the range 40 to approximately 200 ns and a variable or sweepable repetition frequency of approximately 2 to 15 kHz.

3. Method according to one of the claims 1 or 2,
**characterized** in
that the high frequency secondary signal of an object capable of oscillation induced by a pulse of the primary signal is detected as damped oscillation following the pulse of the primary signal, that conductive and/or dielectric secondary signals are eliminated and that the period of the damped oscillation of the secondary signal is evaluated for determining the length and/or frequency of the detected object.

4. Method according to one of the claims 1 to 3,
**characterized** in
that for the detection of dielectric objects, the secondary signals are time-analyzed in the area of the rising and/or falling side of the particular primary signal pulse.

5. Method according to claims 1 to 4,
**characterized** in
that a decoupling of the primary and secondary loop system is used, so that simultaneously the received secondary signal for conductive objects is investigated in the primary signal pulse.

6. Method according to one of the claims 1 to 5,
**characterized** in
that for detection purposes use is made of a loop system as a relative or differential measuring instrument.

7. Method according to one of the claims 1 to 6,
**characterized** in
that the detection of the sought object or objects takes place with coded frequency set to an object-specific, predetermined resonant circuit frequency.

8. Method according to claim 7,
**characterized** in
that the object-specific resonant circuit frequency is produced by pedetermined turns of a conductor, which is in particular in the form of a printed circuit.

## Revendications

1. Procédé pour la détection électromagnétique d'objets qui sont susceptibles de vibrer et/ou sont conducteurs et/ou présentent des propriétés diélectriques, selon lequel on émet des vibrations électromagnétiques sous la forme d'une suite continue d'impulsions courtes, à flanc raide, avec un espacement relativement grand, en tant que signaux primaires dans la région d'un objet à détecter, on détecte les signaux secondaires provenant de l'objet détecté et on les exploite, caractérisé par le fait que l'on émet des impulsions bipolaires en tant que signaux primaires, par le fait que l'on émet les signaux primaires par un système de boucle découplé et par le fait que l'on exploite les signaux secondaires à haute et à basse fréquence induits par chaque impulsion à des fins de spécification des objets, les signaux secondaires en tant que signaux de temps et/ou en tant que valeurs momentanées étant reçus aussi bien pendant les impulsions du signal primaire qu'à la suite de celles-ci.

2. Procédé selon la revendication 1, caractérisé par le fait que l'on utilise comme signal primaire des impulsions bipolaires avec une durée d'impulsion comprise dans la plage allant de 40 à environ 200 ns et une fréquence de répétition variable ou vobulable d'environ 2 à 15 kHz.

3. Procédé selon une des revendications 1 à 2, caractérisé par le fait que l'on détecte le signal secondaire à haute fréquence d'un objet susceptible de vibrer induit par une impulsion du signal primaire en tant qu'oscillation amortie apparaissant après l'impulsion du signal primaire, de telle sorte que les signaux secondaires conducteurs et/ou diélectriques soient éliminés et par le fait que l'on exploite la durée de période de l'oscillation amortie du signal secondaire pour déterminer la longueur et/ou la fréquence de l'objet détecté.

4. Procédé selon une des revendications 1 à 3, caractérisé par le fait que pour la détection d'objets diélectriques on examine les signaux secondaires dans le temps dans la région des flancs ascendants et/ou descendants de l'impulsion concernée du signal primaire.

5. Procédé selon une des revendications 1 à 4, caractérisé par le fait que l'on utilise un découplage du système de boucle primaire et secondaire, de sorte que l'on examine en même temps que l'impulsion du signal primaire le signal secondaire reçu pour des objets conducteurs.

6. Procédé selon une des revendications 1 à 5, caractérisé par le fait que l'on utilise pour la détection un système de boucle comme moyen de mesure relatif ou différentiel.

7. Procédé selon une des revendications 1 à 6, caractérisé par le fait que la détection de l'objet ou des objets recherché(s) a lieu sous une fréquence codée qui est réglée sur une fréquence de circuit oscillant prédéterminée spécifique à l'objet.

8. Procédé selon la revendication 7, caractérisé par le fait que la fréquence de circuit oscillant spécifique à l'objet est produite par des spires prédéfinies d'un conducteur agencé notamment sous forme de circuit imprimé.
